# EUROPEAN PATENT SPECIFICATION

(11) **EP 1 601 920 B1**
(45) Date of publication and mention of the grant of the patent: **18.02.2015**
(21) Application number: 04717562.5
(22) Date of filing: 05.03.2004
(51) Int. Cl.: F26B 7/00, F26B 17/20, F26B 25/00

(54) **A PROCESS FOR DRYING FINELY DIVIDED ORGANIC SUBSTANCES CAPABLE OF PRODUCING EXPLOSIVE REACTIONS**
VERFAHREN ZUR TROCKNUNG VON FEINTEILIGEN ORGANISCHEN STOFFEN, WELCHE EXPLOSIVE REAKTIONEN ERZEUGEN KÖNNEN.
PROCEDE POUR SECHER DES SUBSTANCES ORGANIQUES FINEMENT DIVISEES CAPABLES DE PRODUIRE DES REACTIONS EXPLOSIVES

(30) Priority: 06.03.2003 IT MI20030417
(43) Date of publication of application: 07.12.2005
(73) Proprietor: VOMMCHEMIPHARMA S.r.l., 20089 Rozzano (MI) (IT)
(72) Inventor: CEREA, Giuseppina, c/o Vomm Chemipharma s.r.l, I-20089 Rozzano (Milano) (IT)
(74) Representative: Ferreccio, Rinaldo
(86) International application number: PCT/EP2004/002297
(87) International publication number: WO 2004/079282

(56) References cited:
- EP-A- 0 749 772
- WO-A-01/94866
- WO-A-03/052336
- FR-A- 2 524 129
- GB-A- 663 862
- GB-A- 1 494 487
- GB-A- 2 135 034
- US-A- 1 560 950
- US-A- 2 628 077
- US-A- 3 425 135
- US-A- 4 514 912
- US-A- 4 834 874
- US-A- 4 930 571
- US-A- 5 426 866
- US-A1- 2003 122 003

## Description

### Field of Application

The present invention broadly relates to a process for drying organic substances in aqueous phases or wet organic substances in emulsified organic and aqueous phases.

In particular, the invention relates to a process as above, whereby organic substances are dried under suitable conditions to prevent the finely divided organic powders that issue from the drying process from initiating explosive reactions.

Current processes for drying slurries and the like aqueous-phase or mixed-phase dispersions of organic substances provide for heating in an inert atmosphere, usually a nitrogen atmosphere, as a precaution against explosion hazard.

An example of such a process is disclosed in patent EP 0 491 247. It is stated in this reference that the steam issuing from conventional drying processes is not sufficient to put a drying system completely out of danger. As a matter of fact, the steam cannot always ensure that the oxygen concentration is below the exploding point, because suction effects downstream of the system or air leakage may cause the instant proportion of steam contained in the system to drop significantly. For explosion prevention, the patent teaches neutralizing the system by means of an inert gas.

Although achieving its objective, such a solution to the problem dilates the system running costs due to the high cost of inert gases.

GB 2 135 034 A discloses an apparatus for drying a material by evaporation of vapour therefrom comprising a drying chamber, heat exchanger means associated with the drying chamber, means for feeding the material into the chamber into heat exchanging relationship with the heat exchanger, means to evaporate vapour from the material, a compressor to compress excess vapour from the chamber to raise its temperature, means to inject liquid to de-superheat the compressed vapour, the compressed saturated vapour being fed to the heat exchanger means to condense therein giving up latent heat of evaporation, a proportion of the pressurised liquid from the heat exchanger being supplied for injection by said means to inject, and means to reduce the pressure of the balance of the pressurized liquid.

US 3 425 135 discloses a method of drying a wet particulate solid material which comprises:
- introducing the wet material to one end of a closed elongated drying zone of substantially circular cross-section,
- subjecting the material to high speed rotary agitating beating action above the critical speed to disperse the material in gas to produce a turbulent fluidized bed of gradated material circulating in said zone;
- the outermost layers of largest wet solid particles of said annular fluidized bed circulating in intimate contact with a heated surface surrounding said drying zone;
- simultaneously subjecting at least part of said material to longitudinally applied forces to move the material through the drying zone, and removing the dried material from the opposite end of said zone.

Thus, the underlying problem of this invention is to provide a process for drying organic substances in an aqueous-phase or a mixed-phase (water/organic solvent), which can remove all explosion hazards at a lower running cost of the drying system than that afforded by the aforementioned prior art processes.

This problem is solved, according to the invention, by a continuous process for drying solid organic substances in an aqueous phase or a mixed (water/organic solvent) phase, which process comprises the steps of:
feeding a continuous stream of said substances into a continuous turbo-drier, which comprises a cylindrical tubular body being provided with a heating jacket, closed by end caps at both ends, formed with inlet and outlet openings, and provided with a bladed rotor mounted coaxially for rotation therein at a speed of 200 to 1500 rpm, to obtain from said turbo-drier a continuous output stream of dried powder material and steam at a temperature higher than 100°C;
feeding said continuous stream of dried powder material and steam into at least one apparatus for separating the powder material from the steam;
discharging from said apparatus a continuous stream of the powder material and a continuous stream of steam, which is fed again into the turbo-drier;
wherein the steam pressure inside said turbo-drier and said separating apparatus is kept constant and to such a value to ensure that substantially no oxygen is present, or, in any case, that the powder material cannot be ignited, by continuous drawing, downstream of said separating apparatus, an amount of steam corresponding to the amount of steam generated within said turbo-drier.

This amount of steam drawn downstream of the separating apparatus is then fed into condensing apparatus, specifically turbo-condensers and/or filled-type columns, prior to release to the atmosphere.

Suitably, at least a part of this amount of steam, before being conveyed to said condensing apparatus, is caused to flow through a heat exchanger, in order to generate heated water for plant usage and other applications such as remote space heating.

The steam flowing out of the separating apparatus for routing back to the drier is first caused to flow through a heat exchanger in order to make sure that its temperature meets the process conditions and is preferably within the range of 150° to 270°C.

Preferably, said at least one separating apparatus consists of a cyclone separator and an optional bag-type filter.

Preferably, said condensing apparatus is a turbo-condenser, for example as the one manufactured by VOMM Impianti e Processi S.r.l. and described in Patent EP 0 749 772.

This invention further relates to a system for implementing the above process, and comprising:
a continuous turbo-drier comprising a cylindrical tubular body provided with a heating jacket, closed by end caps at both ends, having at least one inlet opening for the solid organic substances in an aqueous phase or a mixed phase, and having at least one outlet opening for said powder material and the steam, and having a bladed rotor mounted coaxially for rotation therein;
a separating apparatus consisting of a cyclone separator and/or a bag-type filter for separating the powder material from the steam;
a fan arranged to direct the steam issuing from said separating apparatus to said continuous turbo-drier; and
a means of keeping the steam at a constant pressure in the system by removing, downstream of said fan, a predetermined amount of said steam before it is taken to the continuous turbo-drier.

Advantageously, the system of the invention further comprises, placed downstream of said fan and said means of keeping the steam pressure constant, a second heat exchanger arranged to recover thermal energy from said amount of steam removed from the system.

A major advantage of the process and system according to the invention is that the solid organic substances contained in aqueous or mixed phases can be dried into fine powder at no fire or explosion hazard by virtue of the inertization afforded by the steam at all stages of the process and of its pressure being carefully controlled.

This is achieved without the need to inject expensive inert gases into the system.

In addition, by providing the turbo-drier as explained above, the energy balance of the inventive process can be made highly favorable.

The process of the invention is highly versatile and can be used for drying a range of solid organic substances in aqueous and/or water/solvent phases, such as sludge from processed city and industry waste, agricultural produce waste, pig or other animal breeding grounds, mycelia from antibiotic production plants, etc.

Further features and advantages of the method and system according to the invention should be apparent from the following description of embodiments thereof, given by way of example and not of limitation with reference to the accompanying drawings, in which:
Figure 1 is a general diagram of a system for implementing the inventive process; and
Figure 2 shows schematically the turbo-drier employed in said system.

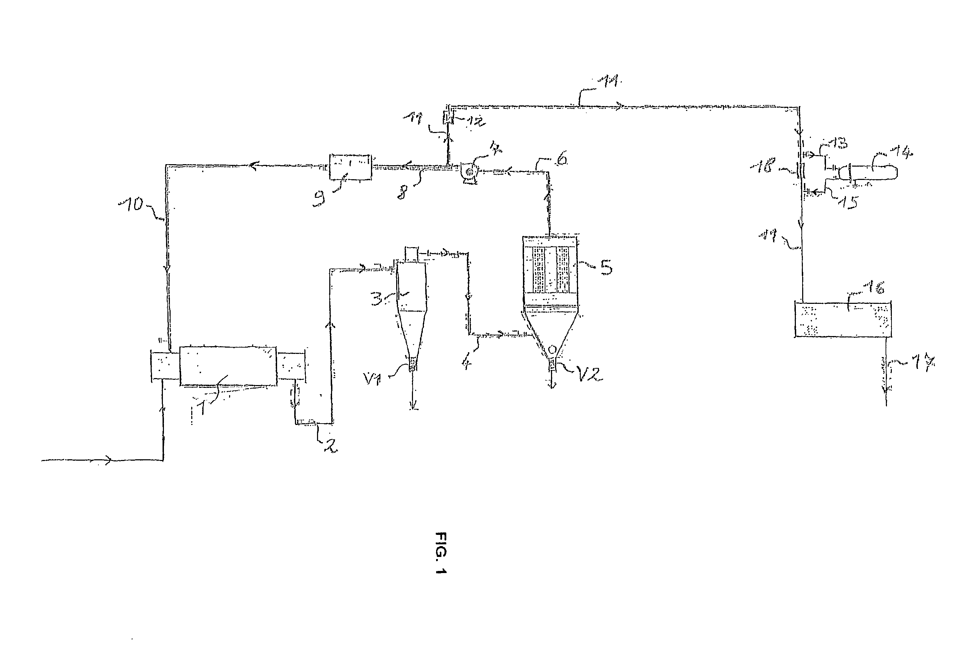

With reference to Figure 1, an exemplary system implementing the process of this invention comprises a continuous drier 1 connected to a cyclone separator 3 by a duct 2, the separator 3 being connected to a bag filter 5 by a duct 4.

A duct 6 connects the filter 5 to a fan 7, itself connected by a duct 8 to a heat exchanger 9 from which a duct 10 leads to the continuous drier 1.

A duct 11 branches off the duct 8 and includes a shut-off valve 12 connecting to a pressure transducer and control means (not shown).

Duct 11 leads to a turbo-condenser 16 whose output is connected by a duct 17 to additional gas-flow purifying apparatus.

A duct 13 branches off duct 11 and connects to the inlet of a heat exchanger 14, the latter having an outlet connected back to duct 11 by a duct 15.

A valve 18, connected to a temperature transducer and control means, is provided in the section of duct 11 that extends downstream of the branching duct 13 and upstream of the branching duct 15.

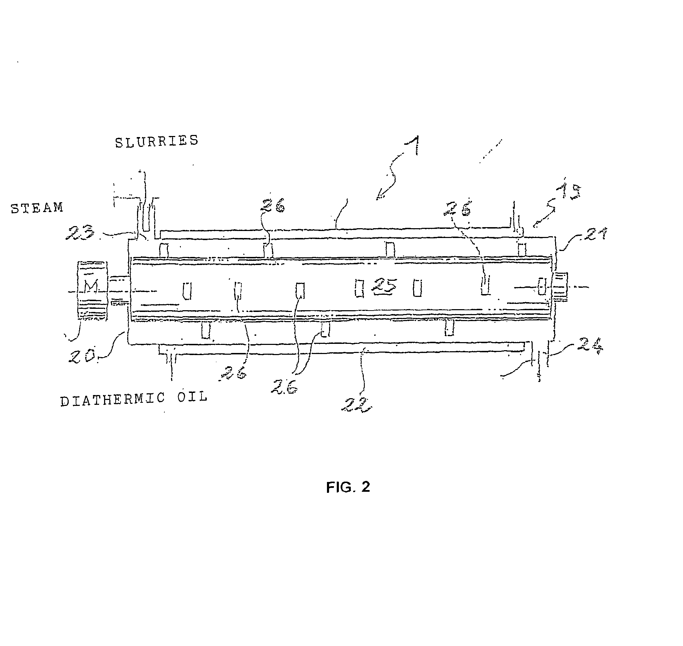

Shown schematically in Figure 2 is a preferred continuous drier implementing the process of the invention.

This is an apparatus 1, which comprises basically a cylindrical tubular body 19 closed at both ends by end caps 20, 21 and provided with a coaxial heating jacket 22 through which a fluid, such as diathermic oil or steam, is caused to flow.

The tubular body 19 has an inlet opening 23 for a stream of organic substances dispersed in an aqueous phase or a mixed phase, and an outlet opening 24 for the powder material that issues from the drying process.

A bladed rotor 25 is rotatably supported within the tubular body 19. The blades 26 of this rotor are helically arranged to simultaneously centrifuge and convey to the output the material being dried. A drive motor M turns the rotor 25 at 200 to 1500 rpm, preferably at 400-600 rpm.

The turbo-drier could have more than one inlet, contingent on applicational requirements.

When a turbo-drier as described above is used, the process of this invention is carried out in the way explained here below.

A stream of organic substances of the aforementioned kind, e.g. a slurry issuing from a digester and having a moisture content of 60-80%, is continuously fed into the turbo-drier 1 through the inlet opening 23. The slurry is centrifuged by the rotor blades, from the moment it enters the turbo-drier, against the heated inner wall and simultaneously driven toward the outlet by the helical arrangement of the blades.

The water contained in the slurry, upon contacting the wall of the tubular body heated to a high temperature under the centrifuging action of the rotor blades, will evaporate at once.

Furthermore, most of the water bound to the solid particles in the slurry will be removed from the solid particles in the form of steam due to the high thermal energy transferred from the heated wall of the tubular body and the high kinetic energy imparted by the rotor blades. After a residence time that may vary between 15 and 180 seconds, a continuous stream of powder having a reduced content of moisture (approximately 10%) and steam, will be output from the turbo-drier.

This continuous stream is discharged through the discharge opening 24 and taken over duct 2 to the cyclone separator 3, where the slurry presently dried into a powder is separated from the steam. The powder is discharged through the stellar valve V1 and delivered to conventional disposal or further processing (e.g., briquetting), while the steam is dumped, via a duct 4, into the bag filter 5 where powder leftover is further separated. The last-mentioned powder is then discharged through a stellar valve V2 for the same end treatment as the powder from the cyclone.

The steam is drawn by the fan 7 into duct 6 and conveyed, through duct 8, to the heat exchanger 9, where its temperature brought to the process conditions (between 150° and 270°C) prior to delivery to the turbo-drier 1 through duct 10.

A portion of the steam outflowing from the fan 7 is diverted to duct 11 by actuation of the valve 12 and regulated by a pressure transducer and control means to ensure that the same steam pressure is maintained throughout the system. In practice, the valve 12 is used for drawing, from a circuit including ducts 2, 4, 6, 8 and 10 and the apparatus interposed among them, an amount of steam per unit time which equals the amount of steam per unit time generated within the turbo-drier.

The amount of steam drawn from said circuit is then taken to a turbo-condenser 16 over duct 11, and over duct 17 to optional apparatus (not shown) for additional purification before release to the atmosphere.

This portion of steam is also used for energy recovery through a heat exchanger 14 for producing heated water, as. The steam flow is cut off at a given height level of duct 11 by a valve 18 and over branch duct 13 directed to the heat exchanger 14, from which it flows out through duct 15 and then through duct 11 located downstream of the valve 18.

The flow rate of the slurry or other solid organic substance in an aqueous phase or mixed phase at the turbo-drier inlet is generally in the range of 15 to 2500 kg/h, according to the capacity of the system.

The wall temperature is maintained preferably at approximately 150° to 280°C, and the average residence time of the slurry or dispersed solid organic substance within the turbo-drier will vary generally between 15 seconds and 3 minutes.

### Example

Using the apparatus described here above, operated in accordance with the process of the invention, a slurry issuing from a digester of a sewage processing system with a moisture content of about 70% was fed continuously into the turbo-drier 1 at a rate of 2000 kg/h.

The temperature of the inner wall of the cylindrical tubular body 19 was maintained at approximately 160°C by steam circulation through the heating jacket 22, the rotational speed of the bladed rotor 25 being kept constant at 350 rpm.

Following a 180-second average residence time within the turbo-drier T, a stream of powder material and steam was discharged continuously and passed to the cyclone separator 3, whereinto most of the powder material (having a moisture content of about 7%) was dumped through the valve V1, whilst the steam and a minor fraction of the powder material entrained in the steam flow were discharged through duct 4 to the bag filter 5. Therein, residual powder material was separated from the steam, with the powder material being discharged through the valve V2 and the steam released through duct 6.

The steam drawn in by the fan was directed for the greater part to the heat exchanger 9, where it was heated to a temperature of about 200°C before return to the turbo-drier 1.

A portion of the steam flowing out from the fan 7, corresponding to the amount of steam generated within the turbo-drier 1 per unit time, was directed over duct 11, under control of the valve 12 and suitable means of pressure control and regulation, to flow through the heat exchanger 14 and into the turbo-condenser 16.

## Claims

1. A continuous process for drying solid organic substances in an aqueous phase or a mixed (water/organic solvent) phase, comprising the steps of:
feeding a continuous stream of said substances into a continuous turbo-drier (1), which comprises a cylindrical tubular body (19) being provided with a heating jacket (22), closed by end caps (20,21) at both ends, formed with inlet and outlet openings (23,24), and provided with a bladed rotor (25) mounted coaxially for rotation therein at a speed of 200 to 1500 rpm, to obtain from said turbo-drier (1) a continuous output stream of dried powder material and steam at a temperature higher than 100°C;
feeding said continuous stream of dried powder material and steam into at least one apparatus (3,5) for separating the powder material from the steam;
discharging from said apparatus (3,5) a continuous stream of the powder material and a continuous stream of steam, which is fed again into the turbo-drier (1);
wherein the steam pressure inside said turbo-drier (1) and said separating apparatus (3,5) is kept constant and to such a value to ensure that substantially no oxygen is present, or, in any case, that the powder material cannot be ignited, by continuous drawing, downstream of said separating apparatus, an amount of steam corresponding to the amount of steam generated within said turbo-drier (1).

2. A process according to Claim 1, wherein said amount of steam drawn downstream of the separating apparatus (3,5) is then fed into condensing apparatus (16), such as turbo-condensers (16) and/or filled-type columns, prior to release to the atmosphere.

3. A process according to Claim 2, wherein at least part of said amount of steam, before being conveyed to said condensing apparatus (16), is caused to flow through a heat exchanger (14) in order to generate heated water.

4. A process according to any of the preceding claims, wherein the steam flowing out of the separating apparatus (3,5) to be fed again into the turbo-drier (1) is previously caused to flow through a heat exchanger (9) in order to make sure that its temperature is within the range of 150° to 270°C.

5. A process according to any of the preceding claims, wherein said at least one separating apparatus (3,5) consists of a cyclone separator (3) and an optional bag-type filter (5).

6. A system for implementing the process of any of the preceding claims, comprising:
a continuous turbo-drier (1) comprising a cylindrical tubular body (19) provided with a heating jacket (22), closed by end caps (20,21) at both ends, having at least one inlet opening (23) for said solid organic substances in an aqueous phase or a mixed phase, and having at least one outlet opening (24) for said powder material and the steam, and having a bladed rotor (25) mounted coaxially for rotation therein,
a separating apparatus (3,5) consisting of a cyclone separator (3) and/or a bag-type filter (5) for separating the powder material from the steam;
a fan (7) arranged to direct the steam issuing from said separating apparatus (3,5) to said continuous turbo-drier (1); and
a means (12) of keeping the steam at a constant pressure in the system by removing, downstream of said separating apparatus (3,5), a predetermined amount of said steam before it is taken to the continuous turbo-drier (1).

7. A system according to Claim 6, further comprising a heat exchanger (9) placed between said fan (7) and said continuous turbo-drier (1) to heat the steam before it is fed back into said continuous turbo-drier (1).

8. A system according to either Claim 6 or 7, further comprising, placed downstream of said fan (7) and said means (12) of keeping the steam pressure constant, a second heat exchanger (14) arranged to recover thermal energy from said amount of steam removed from the system.

9. A system according to any of Claims 6 to 8, wherein said means (12) of keeping the steam at a constant pressure comprises a valve (12) connected to a pressure transducer.

## Patentansprüche

1. Kontinuierliches Verfahren zum Trocknen von festen organischen Stoffen in einer wässrigen Phase oder einer gemischten (Wasser / organisches Lösungsmittel) Phase, umfassend die Schritte:
Zuführen eines kontinuierlichen Stroms der genannten Substanzen in einen Durchlauf-Turbo-Trockner (1), umfassend einen mit einem Heizmantel (22) versehenen zylindrischen rohrförmigen Körper (19), der durch Endkappen (20, 21) an beiden Enden geschlossen ist, und an dem Einlass- und Auslassöffnungen (23,24) angeformt sind, und der einen darin koaxial angeordneten Schaufelrotor (25) aufweist, der für eine Drehung mit einer Geschwindigkeit von 200 bis 1500 U/min ausgelegt ist, um von dem Turbo-Trockner (1) bei einer Temperatur höher als 100°C einen kontinuierlichen Ausgangsstrom eines getrockneten pulverförmigen Materials und eines Dampfes zu erhalten;
Zuführen des genannten kontinuierlichen Stroms aus getrocknetem pulverförmigen Material und Dampf in mindestens eine Vorrichtung (3,5) zum Abtrennen des pulverförmigen Materials aus dem Dampf;
Abführen eines kontinuierlichen Stroms des pulverförmigen Materials und eines kontinuierlichen Dampfstroms aus der Vorrichtung (3,5), wobei der Dampfstrom erneut dem Turbo-Trockner (1) zugeführt wird;
**dadurch gekennzeichnet, dass** der Dampfdruck im Inneren des Turbo-Trockners (1) und der Trennvorrichtung (3,5) konstant und auf einen solchen Wert gehalten wird, dass sichergestellt ist, dass im Wesentlichen kein Sauerstoff vorhanden ist, oder, in jedem Fall, dass das pulverförmige Material nicht entzündet werden kann, durch kontinuierliches Abziehen, stromabwärts von der genannten Trennvorrichtung, einer Menge von Dampf, die der Menge des Dampfes, der innerhalb des Turbo-Trockners (1) entsteht, entspricht.

2. Verfahren gemäß Anspruch 1, **dadurch gekennzeichnet, dass** die genannte Menge an Dampf, die stromabwärts der Trennvorrichtung (3,5) abgezogen wurde, einer Kondensationsvorrichtung (16) zugeführt wird, wie beispielsweise Turbo-Kondensatoren (16) und / oder Füllsäulen, bevor sie in die Atmosphäre freigesetzt wird.

3. Verfahren gemäß Anspruch 2, **dadurch gekennzeichnet, dass** zumindest ein Teil der Menge an Dampf, bevor sie der Kondensationsvorrichtung (16) zugeführt, veranlasst wird durch einen Wärmetauscher (14) zu fließen, um erhitztes Wasser zu erzeugen.

4. Verfahren gemäß einem der vorhergehenden Ansprüche, **dadurch gekennzeichnet, dass** der Dampf, der aus der Trennvorrichtung (3,5) fließt und erneut dem Turbo-Trockner (1) zugeführt wird, vorher veranlasst wird durch einen Wärmetauscher (9) zu fließen, um damit sicherstellen, dass die Temperatur im Bereich von 150° bis 270 °C liegt.

5. Verfahren gemäß einem der vorhergehenden Ansprüche, **dadurch gekennzeichnet, dass** die mindestens eine Trennvorrichtung (3,5) aus einem Zyklonabscheider (3) und einem optionalen beutelartigen Filter (5) besteht.

6. Ein System zur Durchführung des Verfahrens nach einem der vorhergehenden Ansprüche, umfassend:
einem Durchlauf-Turbo-Trockner (1), der einen Heizmantel (22) umfasst, welcher mit einem zylindrischen rohrförmigen Körper (19) versehen ist, der an beiden Enden durch Endkappen (20, 21) geschlossen ist, der mindestens eine Einlassöffnung (23) für die genannten festen organischen Stoffe in einer wässrigen Phase oder einer gemischten Phase aufweist, und der mindestens eine Austrittsöffnung (24) für das pulverförmige Material und den Dampf aufweist, und in dem ein koaxial angeordneter Schaufelrotor (25) für eine Drehung vorgesehen ist,
einer Trennvorrichtung (3,5), bestehend aus einem Zyklonabscheider (3) und/oder einem beutelartigen Filter (5), zur Trennung des pulverförmigen Materials aus dem Dampf;
ein Gebläse (7), das derart ausgelegt ist um den Dampf, der aus der genannten Trennvorrichtung (3,5) kommt, zu dem genannten Durchlauf-Turbo-Trockner (1) zu lenken; und
ein Mittel (12) zum Halten des Dampfes in dem System auf einem konstanten Druck, durch Entfernen, von einer vorbestimmten Menge des genannten Dampfes stromabwärts von der Trennvorrichtung (3,5), bevor der Dampf dem Durchlauf-Turbo-Trockner (1) zugeführt wird.

7. Verfahren gemäß Anspruch 6, **dadurch gekennzeichnet, dass** das System ferner einen Wärmetauscher (9) umfasst, der zwischen dem Gebläse (7) und dem Durchlauf-Turbo-Trockner (1) angeordnet ist, um den Dampf zu erhitzen, bevor er zurückgeführt wird zu dem Durchlauf-Turbo-Trockner (1).

8. Verfahren gemäß einem der Ansprüche 6 oder 7, **dadurch gekennzeichnet, dass** das System ferner, stromabwärts angeordnet von dem Gebläse (7) und dem genannten Mittel (12) zum konstanten Halten des Dampfdruckes, einen zweiten Wärmetauscher (14) umfasst, der die thermische Energie von der Menge des Dampfes, die aus dem System entfernt wird, zurückgewinnt.

9. Verfahren gemäß einem der Ansprüche 6 bis 8, **dadurch gekennzeichnet, dass** das genannte Mittel (12) zum konstanten Halten des Dampfdruckes, ein Ventil (12) umfasst, welches an einen Druckwandler angeschlossen ist.

## Revendications

1. Procédé continu pour sécher des substances organiques solides dans une phase aqueuse ou une phase mixte (eau/solvant organique), comprenant les étapes suivantes :
introduction d'un courant continu desdites substances dans un turbosécheur continu (1), lequel comprend un corps tubulaire cylindrique (19) pourvu d'une enveloppe chauffante (22), fermé aux deux extrémités par des capuchons d'extrémité (20, 21), muni d'ouvertures d'entrée et de sortie (23, 24) et pourvu d'un rotor à pales (25) monté de façon coaxiale pour permettre sa rotation à l'intérieur à une vitesse comprise entre 200 et 1 500 tours/minute, en vue d'obtenir dudit turbosécheur (1) un courant de sortie continu de matière pulvérulente sèche et de vapeur à une température supérieure à 100 °C ;
introduction dudit courant continu de matière pulvérulente sèche et de vapeur dans au moins un appareil (3, 5) pour séparer la matière pulvérulente de la vapeur ;
déchargement dudit appareil (3, 5) d'un courant continu de matière pulvérulente et d'un courant continu de vapeur, lequel est introduit à nouveau dans le turbosécheur (1) ;
dans lequel la pression de la vapeur à l'intérieur du turbosécheur (1) et dudit appareil de séparation (3, 5) est maintenue constante et à une valeur propre à assurer qu'aucune quantité substantielle d'oxygène ne soit présente, ou dans tous les cas, que la matière pulvérulente ne puisse pas s'enflammer, en prélevant de façon continue, en aval dudit appareil de séparation, une quantité de vapeur correspondant à la quantité de vapeur générée à l'intérieur du turbosécheur (1).

2. Procédé selon la revendication 1, dans lequel ladite quantité de vapeur prélevée en aval de l'appareil de séparation (3, 5) est ensuit introduite dans des appareils de condensation (16), tels que des turbocondensateurs (16) et/ou des colonnes à garnissage, avant rejet dans l'atmosphère.

3. Procédé selon la revendication 2, dans lequel au moins une partie de ladite quantité de vapeur, avant d'être dirigée vers lesdits appareils de condensation (16), est amenée à traverser un échangeur de chaleur (14) en vue de générer de l'eau chaude.

4. Procédé selon l'une des revendications précédentes, dans lequel la vapeur sortant de l'appareil de séparation (3, 5) pour être introduite à nouveau dans le turbosécheur (1) est préalablement amenée à traverser un échangeur de chaleur (9) en vue de s'assurer que sa température est dans la fourchette comprise entre 150 et 270 °C.

5. Procédé selon l'une des revendications précédentes, dans lequel ledit au moins un appareil de séparation (3, 5) consiste en un séparateur cyclone (3) et un filtre à manche (5) optionnel.

6. Système pour mettre en oeuvre le procédé selon l'une des revendications précédentes, comprenant :
un turbosécheur continu (1) comprenant un corps tubulaire cylindrique (19) pourvu d'une enveloppe chauffante (22), fermé aux deux extrémités par des capuchons d'extrémité (20, 21), muni d'au moins une ouverture d'entrée (23) pour lesdites substances organiques solides dans une phase aqueuse ou une phase mixte, et muni d'au moins une ouverture de sortie (24) pour la matière pulvérulente et la vapeur, et pourvu d'un rotor à pales (25) monté de façon coaxiale pour pouvoir tourner à l'intérieur,
un appareil de séparation (3, 5) sous la forme d'un séparateur cyclone (3) et/ou d'un filtre à manches (5) pour séparer la matière pulvérulente de la vapeur ;
un ventilateur (7) disposé pour diriger la vapeur sortant de l'appareil de séparation (3, 5) vers le turbosécheur continu (1) ; et
des moyens (12) pour maintenir la vapeur à une pression constante dans le système en éliminant, en aval de l'appareil de séparation (3, 5), une quantité prédéterminée de ladite vapeur avant qu'elle ne soit conduite au turbosécheur continu (1).

7. Système selon la revendication 6, comprenant en outre un échangeur de chaleur (9) placé entre le ventilateur (7) et le turbosécheur continu (1) pour chauffer la vapeur avant qu'elle ne soit ramenée dans le turbosécheur continu (1).

8. Système selon la revendication 6 ou 7, comprenant en outre, placé en aval du ventilateur (7) et des moyens (12) pour maintenir constante la pression de la vapeur, un deuxième échangeur de chaleur (14) agencé pour récupérer de l'énergie thermique de ladite quantité de vapeur prélevée du système.

9. Système selon l'une des revendications 6 à 8, dans lequel lesdits moyens (12) pour maintenir la vapeur à une pression constante comprennent une valve (12) raccordée à un transducteur de pression.
